(19) Europäisches Patentamt
European Patent Office
Office européen des brevets

(11) **EP 1 803 536 A1**

(12) **EUROPEAN PATENT APPLICATION**
published in accordance with Art. 158(3) EPC

(43) Date of publication:
**04.07.2007 Bulletin 2007/27**

(51) Int Cl.:
**B25J 13/08** *(2006.01)*

(21) Application number: **05780443.7**

(22) Date of filing: **19.08.2005**

(86) International application number:
**PCT/JP2005/015134**

(87) International publication number:
**WO 2006/022201 (02.03.2006 Gazette 2006/09)**

(84) Designated Contracting States:
**DE FR GB IT SE**

(30) Priority: **25.08.2004 JP 2004244896**
**10.08.2005 JP 2005232190**

(71) Applicant: **KABUSHIKI KAISHA YASKAWA DENKI**
**Kitakyushu-shi,**
**Fukuoka 806-0004 (JP)**

(72) Inventors:
• **NAGATA, Hideo,**
**KABUSHIKI KAISHA YASKAWA DENKI**
**Kitakyushu-shi Fukuoka 806-0004 (JP)**

• **INOUE, Yasuyuki,**
**KABUSHIKI KAISHA YASKAWA DENKI**
**Kitakyushu-shi Fukuoka 806-0004 (JP)**

(74) Representative: **Grünecker, Kinkeldey,**
**Stockmair & Schwanhäusser**
**Anwaltssozietät**
**Maximilianstrasse 58**
**80538 München (DE)**

(54) **ROBOT EVALUATION SYSTEM AND EVALUATION METHOD**

(57) There are provided an evaluating system of a robot and its evaluating method capable of measuring a movement state amount, particularly, a position or a speed or an acceleration, or an angle or an angular speed or an angular acceleration of an arm of a robot by a simple system constitution in noncontact, accurately, in real time, dispensing with a complicated calibration.

There is provided an evaluating system of a robot **characterized in** including a sensor provided at an arm of a robot for detecting amovement state amount of the arm, an angle detector for measuring an articulate angle of each axis servo motor of the robot, a first sensor operating portion for converting a state amount of the sensor into a state amount in a robot coordinate system, a second sensor operating portion for converting an articulate angle of the angle detector into a state amount in the robot coordinate system, and an output synthesizing portion for synthesizing an output of the first sensor operating portion and an output of the second sensor operating portion.

FIG. 1

**Description**

Technical Filed

The present invention relates to an evaluating system for measuring a state amount, particularly, a position, a speed or an acceleration of a hand tip of a robot in a robot coordinate system and its evaluating method.

Background Art

When an operational function of a serial link type robot of a background art is evaluated or when a parameter adjustment is carried out, it is important to accurately measure a state amount of a hand tip of the robot, particularly, a position or a speed or an acceleration, or an angle or an angular speed or an angular acceleration, however, a movable range of the hand tip of the serial link type robot is wide, also degrees of freedom of a movement of the hand tip is constituted by a number of degrees of freedom such as 6 orthogonal and rotational degrees of freedom, and therefore, it is difficult to accurately measure the state amount.

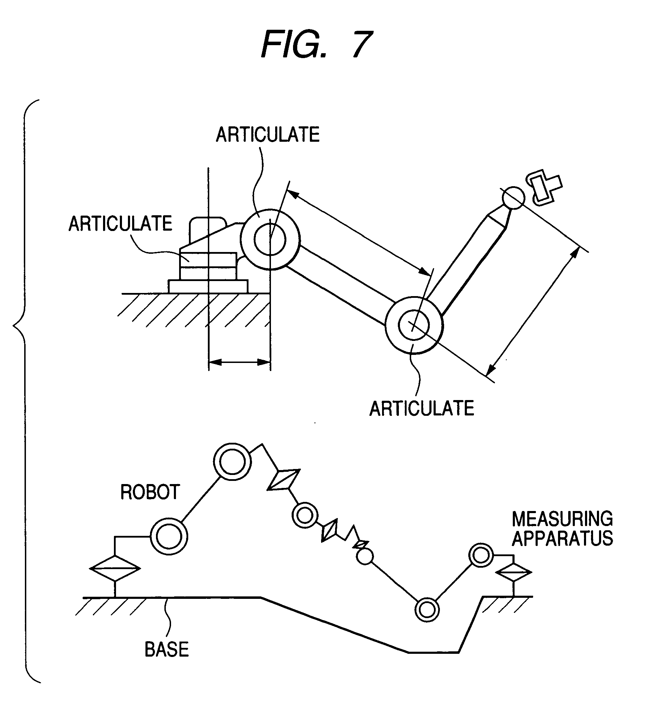

with regard to such a problem, for example, as shown by Fig. 7, there is a system of measuring a position of a robot hand tip constituting an object of measurement by attaching a three axes robot of a passive link having a rotational angle sensor to the robot hand tip (refer to, for example, Patent Reference 1). According to the system, there is constructed a constitution of absorbing a change in a posture of the robot hand tip constituting the object of measurement by a universal joint and calculating only a change in the position from a value of the rotational angle sensor and a link length.

Further, there is a system of calculating an absolute position posture by taking an image of an object of measurement by 2 pieces or more of cameras and calculating a three-dimensional position from the image and calculating a relative position posture by a gyro sensor and an acceleration sensor (refer to, for example, Patent Reference 2). According to the system, there is constructed a constitution of arranging a marker or LED on the object of measurement, calculating a continuous three-dimensional position by taking the image continuously by 2 sets or more of cameras and synthesizing the mage by an exclusive controller, and using relative position information of an acceleration sensor or the like at a position an image of which cannot be taken by the cameras.

Further, there is a system of measuring a vibration by an acceleration sensor attached to an arm, calculating a natural frequency of a robot by FFT analysis, and controlling a robot in accordance with the natural frequency (refer to, for example, Patent Reference 3). According to the system, there is constructed a constitution of previously calculating a prediction equation for calculating the natural frequency as a function of the natural frequency, a position of a robot arm and a mass of a work.

Further, there is a system of making a multisensor measuring head having 3 surfaces orthogonal to each other having a noncontact type sensor opposed to a target having 3 surfaces orthogonal to each other, calculating a pose of a relative movement of the target based on a cube constant position measurement principle, and simultaneously measuring data of a position and a direction (refer to, for example, Patent Reference 4).

Further, there is also amethodof promoting an operational function, or correcting a parameter of the robot by using an external field sensor although the method does not evaluate an operational function. As a method of correcting a parameter of a robot per se, there is also a method of providing an external field sensor for acquiring information of an operational object and an internal field sensor for acquiring position posture information of the robot and modeling a recognition error from information in a reference operation in which a hand tip of the robot is in line with a linear object (refer to, for example, Patent Reference 5).

As a method of restraining a vibration of a robot, there is method of providing an acceleration sensor at a hand tip of an arm, passing an acceleration signal through a low pass filter to be converted into accelerations of respective axes by Jacobian transposematrix to be fedback to a speed instruction (refer to, for example, Patent Reference 6).

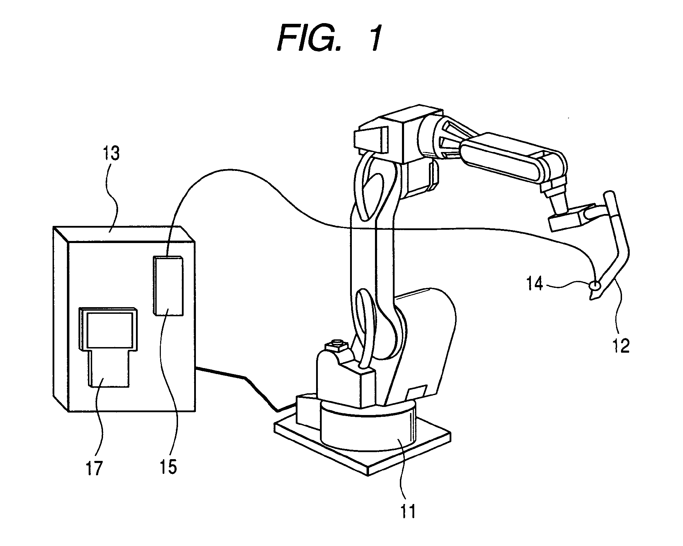

Patent Reference 1: JP-UM-A-07-031295 (Claim 1, Fig.1)
Patent Reference 2: JP-A-2004-050356 (Claim 1, Fig.1)
Patent Reference 3: JP-A-06-278080 (Claim 1, Fig.1)
Patent Reference 4: JP-A-08-090465 (Claim 1, Fig.1)
Patent Reference 5: JP-A-11-197834 (Claim 1, Fig.1)
Patent Reference 6: Japanese Patent No. 3442941 (Claim 1, Fig.1)

Disclosure of the Invention

Problems to be solved by the Invention

However, according to the system of measuring the position of the robot hand tip of the measurement object by the 3 axes robot of the passive link having the rotational angle sensor, there poses a problem that it is difficult to measure a total of a movable range of the robot constituting the measurement object by one time. Further, since the robot constituting the measurement object and the 3 axes robot are connected, depending on an operation of the robot constituting the measurement object, there is a danger of destructing the 3 axes robot. Further, owing to the 3 axes robot, there pose a problem that a rotational operation of the hand tip of the robot cannot be measured, a problem that a measurement accuracy depends on a working/integrating accuracy of the 3 axes robot of the passive link, and a problem that a rotational angle sensor having a high resolution is needed.

Further, according to the system of operating to calculate the three-dimensional position from the image of the measurement obj ect taken by 2 pieces or more of cameras and the acceleration sensor and the gyro sensor, when a time period in which the image cannot be taken by the cameras is long, the system needs to depend on twice integration of the acceleration sensor and the gyro sensor to pose a problem that offset amounts thereof become considerably large and discontinuous. Further, there also poses a problem that the system cannot be used unless a complicated calibration is carried out between the robot and the apparatus before measurement, an imageprocessing is needed, and therefore, a state of amount of the hand tip of the robot cannot be displayed in real time. Further, there also poses a problem that the measuring apparatus using a plurality of sets of such cameras is expensive.

Further, according to the system of measuring the vibration by the acceleration sensor attached to the arm and calculating the natural frequency of the robot by the FFT analysis, although the vibration of the hand tip can be calculated, an absolute position or a speed or an acceleration, or an angle or an angular speed or an angular acceleration of the hand tip in operating to evaluate operational function of the robot cannot be measured and evaluated.

Further, according to the system of making the multisensor measuring head having the 3 surfaces orthogonal to each other having a noncontact sensor opposed to the target having the 3 surfaces orthogonal to each other, there poses a problem that it is difficult to measure a total of the movable range of the robot constituting the measurement obj ect by one time. Further, there also poses a problem that a measurement accuracy depends on an accuracy of working the target.

Further, according to the method of measuring the same state amount in the linear operation by the external field sensor and the internal field sensor and modeling the recognition error, the operational function of the hand tip of the robot cannot be evaluated. Further, similarly, according to the method of passing the acceleration signal through the low pass filter, converting the signal into the accelerations of the respective axes by Jacobian transpose matrix to be fed back to the speed instruction, the operational function of the hand tip of the robot cannot be evaluated.

Hence, the invention has been carried out in view of such problems and it is an object thereof to provide an evaluating system of a robot capable of measuring a state amount of a tool center point of robot, particularly, a position or a speed or an acceleration, or an angle or an angular speed or an angular acceleration by a simple system constitution dispensing with a complicated calibration, in noncontact and accurately, in real time and its evaluating method.

Further, it is an object thereof to be able to display an output synthesized value synthesized with an instruction value and a sensor value of a hand tip of a robot on an operational pendant and thereby evaluating a response of the hand tip of the robot by an operator in real time.

Further, it is an object thereof that an operator can intuitively grasp a state amount of a hand tip of the robot and can simply carry out a servo gain adjustment, a speed loop gain adjustment of respective axes servo motors.

Further, it is an obj ect thereof to detect an abnormality of an operation of a robot by a sensitivity higher than that when only an inner state amount of a robot is used.

Further, it is an object thereof to carry out a servo gain adjustment, a speed loop gain adjustment of respective axes servo motors and detect an abnormality of an operation of a robot also from a remote location.

Further, it is an obj ect thereof to measure a state amount of an arm of a robot by a simple system constitution in noncontact and accurately.

Means for solving the Problems

According to the invention, in order to resolve the problem, the invention is constituted as follows.
According to Claim 1, there is provided:

an evaluating system of a robot including:

a sensor provided at an arm of a robot for detecting a movement state amount of the arm;
an angle detector for measuring an articulate angle of each axis servo motor of the robot;
a first sensor operating portion for converting a state amount of the sensor into a state amount in a robot coordinate system;
a second sensor operating portion for converting the articulate angle of the angle detector into the state amount in the robot coordinate system; and

an output synthesizing portion for synthesizing an output of the sensor operating portion and an output of the second sensor operating portion.

Further, according to Claim 2, there is provided the evaluating system of a robot, wherein the sensor is an acceleration sensor.

Further, according to Claim 3, there is provided the evaluating system of a robot, wherein the sensor is a gyro sensor.

Further, according to Claim 4, there is provided the evaluating system of a robot, wherein a servo gain of the each servo motor of the robot is adjusted based on an output synthesized value constituting an output of the output synthesizing portion.

Further, according to Claim 5, there is provided the evaluating system of a robot, wherein an orthogonal instruction value constituted by converting an articulate instruction of the each axis servo motor into a position and a speed and an acceleration in the robot coordinate system and an output synthesized value constituting an output of the output synthesizing portion are displayed on a screen of an operating pendant connected to the control apparatus of the robot.

Further, according to Claim 6, there is provided an evaluating method of a robot including:

a first step of calculating a first sensor output value by converting a state amount of a sensor provided at an arm of a robot for detecting a movement state amount of the arm into a state amount in a robot coordinate system;

a second step of calculating a second sensor output value by converting an articulate angle measured by an angle detector connected to each axis servo motor of the robot into a state amount in the robot coordinate system; and

a third step of calculating an output synthesized value by synthesizing the first sensor output value and the second sensor output value.

Further, according to Claim 7, there is provided the evaluating method of a robot according to Claim 6, further including:

a fourth step of adjusting a servo gain of the each axis servo motor of the robot based on the output synthesized value.

Further, according to Claim 8, there is provided the evaluating method of a robot according to Claim 7, wherein a speed loop gain of the each axis servo motor is adjusted by converting the state amount in the robot coordinate system into a state amount in an angle coordinate system.

Further, according to Claim 9, there is provided the evaluating system of a robot according to Claim 1, wherein an abnormality in an operation of the robot is detected based on an output synthesized value constituting an output of the output synthesizing portion.

Further, according to Claim 10, there is provided the evaluating system of a robot according to Claim 5, wherein the orthogonal instruction value and the output synthesized value are transmitted to a remote place by way of a communicating portion.

Further, according to Claim 11, there is provided the evaluating method of a robot according to Claim 6, further including:

a fourth step of detecting an abnormality in an operation of the robot based on the output synthesized value.

Further, according to Claim 12, there is provided an evaluating system of a robot in an evaluating system of a robot including each axis servo motor of a robot, a mechanism portion connected to the servo motor and a motor control portion for driving the servo motor based on an instruction,

the evaluating system of the robot including:

a simulation portion including a motor model simulating the servo motor, a mechanism model portion simulating the mechanism portion and a control model portion simulating the motor control portion;

a sensor provided at an arm of the robot, for detecting a movement state amount of the arm;

a first sensor operating portion for converting a state amount of the sensor into a state amount in a robot coordinate system;

a second sensor operating portion for converting an articulate model angle response or a model mechanical position response constituting an output of the simulation portion into a state amount in the robot coordinate system; and

an output synthesizing portion for synthesizing an output of the first sensor operating portion and an output of the second sensor operating portion.

Further, according to Claim 13, there is provided an evaluating method of a robot including:

a first step of calculating a first sensor output value by converting a state amount of a sensor provided at an arm of a robot, for detecting a movement state amount of the arm into a state amount in a robot coordinate system;

a second step of calculating an articulate model angle response or a model mechanical position response as an output of a simulation portion by inputting an instruction the same as an instruction of an actual machine portion to the simulation portion by the simulation portion constituted by a motor model, a mechanism model portion and a control model portion respectively simulating the actual machine portion constituted by each axis servo motor of the robot, a mechanism portion connected to the servo motor and a motor control portion for driving the servo motor based on the instruction;

a third step of calculating a second sensor output value by converting the articulate model angle response or the model mechanical position response into a state amount in the robot coordinate system; and

a fourth step of calculating an output synthesized value by synthesizing the first sensor output value and the second sensor output value.

Effects of the Invention

As described above, according to the evaluating system of the robot of Claims 1, 2 and 3, the state amount of the arm of the robot can be measured by a simple constitution in noncontact, accurately, dispensing with a complicated calibration by converting the state amounts from the sensor provided at the arm of the robot for detecting the movement state amount and the angle detector of each axis of the robot into the state amounts in the robot coordinate system to synthesize.

According to the evaluating system of the robot according to Claim 4, by converting the state amounts from the sensor provided at the arm of the robot for detecting the movement state amount and the angle detector of each axis of the robot into the state amounts in the robot coordinate system to synthesize, the operator can intuitively grasp the state amount at the hand tip of the robot and can simply adjust the servo gain of the each axis servo motor.

According to the evaluating system of the robot according to Claim 5, by enabling to display the instruction value of the hand tip of the robot and the output synthesized value synthesized with the sensor values on the operating pendant, the operator can evaluate response of the hand tip of the robot in real time.

According to the evaluating system of the robot according to Claim 6, by converting the state amounts from the sensor provided at the arm of the robot for detecting the movement state amount and the angle detector of each axis of the robot into the state amounts in the robot coordinate system to synthesize, the state amount of the hand tip of the robot can be measured by a simple system constitution in noncontact, accurately, dispensing with a complicated calibration.

According to the evaluating method of the robot according to Claim 7, by converting the state amounts from the sensor provided at the arm of the robot for detecting the movement state amount and the angle detector of each axis of the robot into the state amounts in the robot coordinate system to synthesize, the servo gain of the each axis servo motor can be adjusted from the state amount at the hand tip of the robot.

According to the evaluating method of the robot according to Claim 8, the speed loop gain of the each axis servo motor can be adjusted by converting the state amount in the robot coordinate system into the state amount in the angle coordinate system.

According to the evaluating system of the robot according to Claim 9, by detecting an abnormality in the operation of the robot based on the output synthesized value constituting the output of the output synthesizing portion, the abnormality can be detected by a sensitivity higher than that when only the state amount at inside of the robot is used.

According to the evaluating system of the robot according to Claim 10, by transmitting the orthogonal instruction value and the output synthesized value to the remote place by way of the communicating portion, the servo gain can be adjusted or the abnormality of the operation can be detected also from the remote place.

According to the evaluating method of the robot according to Claim 11, by detecting the abnormality of the operation of the robot by converting the state amounts from the sensor provided at the arm of the robot for detecting the movement state amount and the angle detector of each axis of the robot into the state amounts in the robot coordinate system to synthesize, the abnormality can be detected by a sensitivity higher than that when only the state amount at inside of the robot is used.

According to the evaluating system of the robot according to Claim 12, by converting the state amounts by the sensor provided at the arm of the robot for detecting the movement state amount and the simulation of the robot into the state amounts in the robot coordinate system to synthesize, the state amount of the arm of the robot can be measured by a simple system constitution in noncontact, accurately, dispensing with a complicated calibration and without deteriorating an accuracy by doubly detecting a vibration.

According to the evaluating method of the robot according to Claim 13, by converting the state amounts by the sensor provided at the arm of the robot for detecting the movement state amount and the simulation of the robot into the state amounts in the robot coordinate system to synthesize, the state amount of the arm of the robot can be measured by a simple system constitution in noncontact, accurately, dispensing with a complicated calibration, without deteriorating an accuracy by doubly detecting the vibration.

Brief Description of Drawings

[Fig.1]
Fig.1 is an outline view showing a first embodiment of the invention.
[Fig.2]

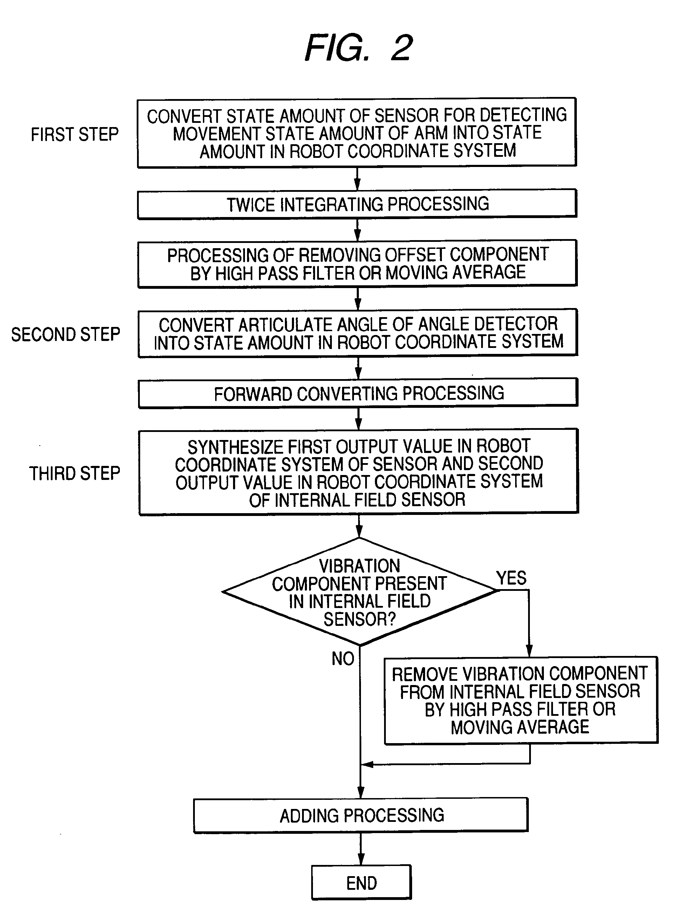

Fig.2 is a flowchart showing the first embodiment of the invention.
[Fig.3]

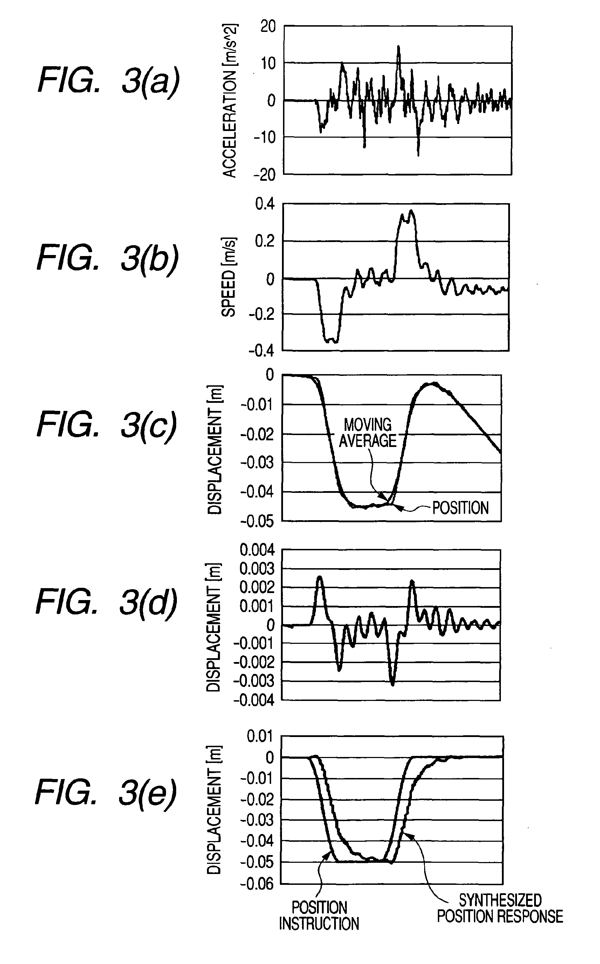

Fig.3 illustrates signal waveforms showing the first embodiment of the invention.
[Fig.4]

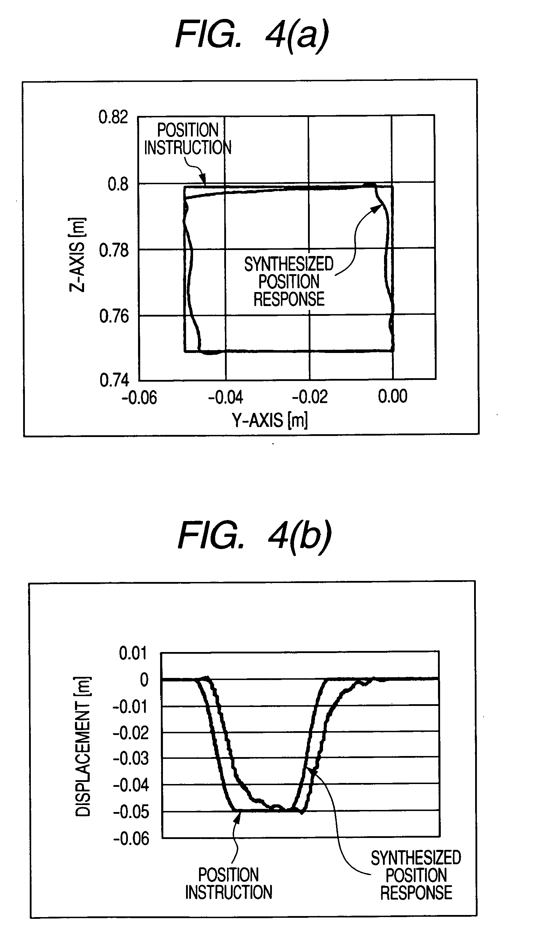

Fig.4 illustrates signal waveforms on a robot operating pendant showing a second embodiment of the invention.
[Fig.5]

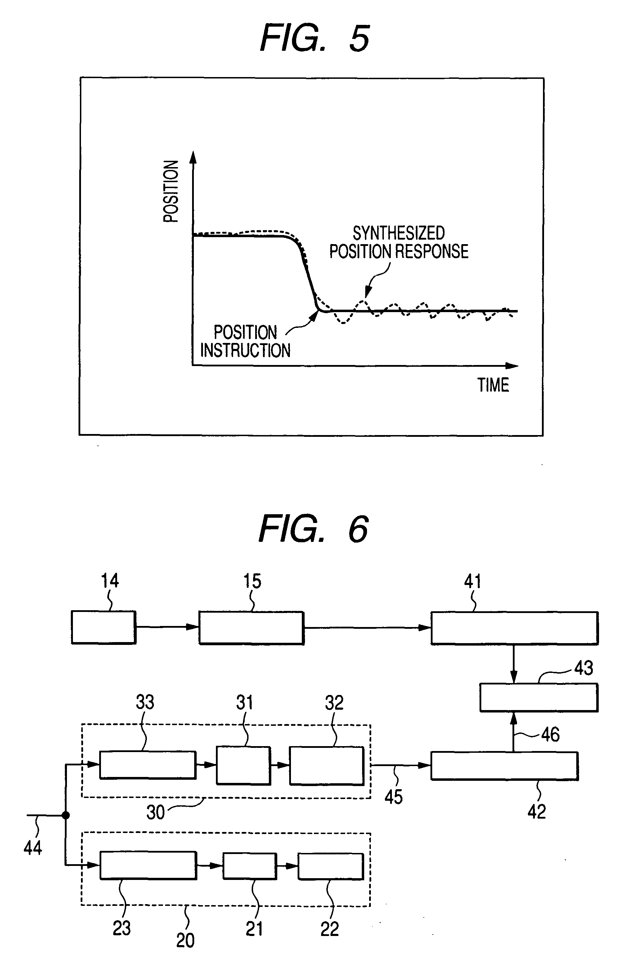

Fig. 5 illustrates a signal waveform on a robot operating pendant showing a third embodiment of the invention.
[Fig.6]
Fig.6 is a block diagram showing a fourth embodiment of the invention.
[Fig.7]
Fig.7 illustrates views showing a control system of a

background art.

Description of Reference Numerals and Signs

11..robot
12..tool
13..control apparatus
14..sensor
15..sensor receiving portion
16..angle detector
17..operating pendant
20..actual machine portion
21..servo motor
22..mechanism portion
23..motor control portion
30..simulation portion
31..motor model
32..mechanism model portion
33..control model portion
41..first sensor operating portion
42..second sensor operating portion
43..output synthesizing portion
44..instruction
45..model state amount
46..second state amount

Best Mode for Carrying Out the Invention

Embodiments of the invention will be explained in reference to the drawings as follows.

Embodiment 1

A first embodiment of the invention will be explained in reference to Fig.1, Fig.2 and Fig.3. Here, a robot 11 constituting an evaluation object is a 6 axes orthogonal articulated robot, and an explanation will be given of an evaluating system for measuring and evaluating a state amount of a hand tip of the robot 11, particularly, a position or a speed or an acceleration, or an angle or an angular speed or an angular acceleration in 3 stages. Respective steps are carried out by a control flow shown in Fig.2.

As shown by Fig.1, the robot 11 is driven by a control apparatus 13. A hand tip of the robot 11 is connected with a tool 12 constituting an end effector interchanged in accordance with an operation. A sensor 14 for evaluating a position of the hand tip of the tool 12 is included in or arranged at a surface of the tool 12. In the following embodiment, the sensor 14 is constituted by a 3 axes acceleration sensor and an explanation will be given of a case of evaluating the position of the hand tip of the robot 11.

(1) first step

Here, an explanation will be given of a method of converting a state amount (acceleration) of the sensor into a state amount (position) in a robot coordinate system.

An acceleration signal of the acceleration sensor 14 is inputted to a sensor receiving portion 15 at inside of the control apparatus 13. At inside of the sensor receiving portion 15, the acceleration signal is converted into a position in a sensor coordinate system by twice integrating the acceleration signal. Here, an offset is produced in the converted position by also integrating a noise component of the signal, and therefore, the offset component is removed by a high pass filter or a moving average. Next, the position in the sensor coordinate system removing the offset component is converted into a position in a robot coordinate system of the robot 11 by using a rotational matrix from a base of the robot 11 to the tool.

(2) second step

Here, an explanation will be given of a method of converting a state amount (articulate angle) of an internal field sensor into a state amount (position) in the robot coordinate system.

Motors of respective articulates of the robot 11 are arranged with angle detectors 16 as internal field sensors. The articulate angle constituting anoutput of the angle detector 16 can be converted into the position in the robot coordinate system of the robot 11 by using a conversion equation generally referred to as forward conversion or forward kinematics.

(3) third step

Here, an explanation will be given of a method of synthesizing a first state amount (position) in the robot coordinate system by the sensor calculated at the first step and a second state amount (position) in the robot coordinate system by the internal field sensor calculated at the second step.

As a role of detection for respective sensors according to the embodiment, a state amount on a load side from a speed reducer of the motor is measured by a sensor arranged at an arm and a state amount on a motor side from the reducer of the motor is measured by an internal field sensor. Therefore, it is necessary to classify a processing by a case in which the load side effects an influence from the speed reducer of the motor to the internal field sensor and a case in which the load side does not effect an influence from the speed reducer to the internal field sensor. In a specific determination of whether the load side effects the influence from the speed reducer of the motor to the internal field sensor, vibration components of the internal field sensor and the external field sensor at the same time are compared, and when there is the same vibration component, it is determined that there is the influence. For example, when a vibration on the load side is transmitted to the motor by way of a spring element of the speed reducer and the vibration is measured by the angle detector, it is necessary to remove the vibration component from the signal of the internal field sensor. In detecting the vibration component, a signal processing of FFT or the like may separately be carried out.

When the load side does not effect an influence from the speed reducer of the motor to the internal field sensor, the first state amount (position) in the robot coordinate system by the sensor arranged at the arm and the second state amount (position) in the robot coordinate system by the internal field sensor may be added. When the load side effects an influence from the speed reducer of the motor to the internal field sensor, the influence needs to be removed. Specifically, a vibration component is extracted from the state amount (position) of the internal field sensor by a high pass filter or a moving average and a value constituted by subtracting the vibration component from the state amount (position) is made to constitute the state amount (position) of the internal field sensor. The second state amount (position) of the robot coordinate system calculated from the internal field sensor removing the vibration component and the first state amount (position) in the robot coordinate system by the sensor may be added.

Next, an explanation will be given of a wave form processing when the robot 11 is made to actually carry out a reciprocating operation of 50 [mm] in a Y-axis direction in the robot coordinate system.

Fig.3 (a) shows an acceleration data of Y-axis from the acceleration sensor 14 constituting a sensor. The acceleration sensor signal includes a noise component, and therefore, the acceleration sensor signal is made to pass through a low pass filter or the like as necessary.

Fig. 3 (b) shows a speed data constituted by integrating the acceleration data of the Y-axis over time. Fig.3 (c) shows a position data constituted by integrating the speed data over time, and a position data constituted by subjecting the position data to a moving average by a time period of 100 [ms] . It is known that offset components are outputted in the speed data and the position data. By subjecting the position data to the moving average, the offset component is removed. Further, also the offset component of the speeddatamaybe removed as necessary. A method of removing the offset component of the speed data is similar to the method of removing the offset component of the position data and the offset component can be removed also by passing the offset component through a high pass filter. Fig.3 (d) shows a vibration data constituted by subtracting the position data subjected to the moving average from the position data. The vibration data shows a vibration component on a load side from the speed reducer of the motor.

Fig.3 (e) shows the position data synthesized with the vibration data in the robot coordinate system and the position in the robot coordinate systemoperated from the angle detector, and a position instruction data in the robot coordinate system.

In this way, the senor 14 (3 axes of acceleration sensor) is arranged at the tip of the arm of the robot 11, and the position of the tip of the arm of the robot 11 can be calculated by a simple processing from the state amount (acceleration) of the sensor 14 and the state amount (articulate angle) of the internal field sensor 16 (angle detector). By using the acceleration sensor constituting a noncontact sensor, the operational function of the robot can be evaluated without restricting the operation of the robot.

Further, by using a 3 axes gyro sensor in place of the acceleration sensor, a posture in the robot coordinate system of the robot can also be calculated. Further, there may be constructed a constitution usingboth of the acceleration sensor and the gyro sensor.

Although here, the position in the robot coordinate system is calculated, other state amount (speed or acceleration or the like) in the robot coordinate system can be calculated similar to the case of the position.

Embodiment 2

A second specific embodiment of the invention will be explained by showing the embodiment in Fig.4 and Fig.5. Fig.4 illustrates signal waveforms on a robot operating pendant. In (a), a locus of a position instruction in a rectangular shape and a locus of a synthesized position response in correspondence therewith are shown in a plane constituted by Y-axis and Z-axis. Further, (b) shows a behavior (ordinate: displacement) of a position instruction and a synthesized position response relative to time (abscissa).

According to the embodiment, whereas the first specific embodiment calculates the position in the robot coordinate system, the embodiment differs therefrom in that an adjustment of a servo gain (particularly, position loop gain or speed loop gain) of respective axes servo motors of the robot 11 is carried out from the calculated position.

A procedure until calculating the state amount (position) in the robot coordinate system of the robot 11 is the same as that of the first specific embodiment, and therefore, an explanation thereof will be omitted.

When the state amount (position) in the robot coordinate system is calculated, the operation proceeds to a next fourth step.

(4) fourth step

As shown by Fig.4 (a), the calculated state amount (position) in the robot coordinate system is displayed in a screen on an operating pendant 17 connected to the control apparatus 13 along with an instruction. The operator can adjust the position loop gains of the respective axes servo motors by a large amount such that a deviation between the position instruction and the synthesized position response is reduced while looking at waveforms thereof. When a vibration is generated at the hand tip of the robot by setting the position loop gain by an excessively large amount, also the vibration appears in the synthesized position response, and therefore, the position loop gain may conversely be adjusted to reduce.

Although according to the embodiment, the servo gain is adjusted by the state amount (position) in the robot coordinate system, as shown by Fig. 4 (b), an adjusting operation may be carried out by constituting the state amount synthesized by the sensor arranged at the arm and the internal field sensor by a state amount (angle or angular speed or angular acceleration) in an angle coordinate system. The operation is effective also in adjusting the speed loop gain since particularly when motor capacities differ for the respective axes of the robot, values of the speed loop gains differ by the respective axes servo motors.

Embodiment 3

A third specific embodiment of the invention will be explained in reference to Fig.5.

Whereas according to the first specific embodiment, the adjustment of the servo gains of the servomotors of the respective

8

axes of the robot 11 is carried out by the calculated position, the embodiment differs therefrom in that an abnormality of the operation of the robot is detected by the calculated position.

For example, here, there is assumed a case in which the speed reducer arranged between the servo motor and the arm is worn. When the speed reducer is worn, play is produced at an output end of the reducer, vibration at the arm tip of the robot is increased, and therefore, an abnormality in the operation of the robot is determined by catching the vibration phenomenon.

The procedure until calculating the state amount (position) of the robot coordinate system of the robot 11 is the same as that of the first specific embodiment, and therefore, an explanation thereof will be omitted.

When the state amount (position) in the robot coordinate system is calculated, the operation proceeds to a fourth step shown below.

(4) fourth step

As shown by Fig. 5, the calculated state amount (position) in the robot coordinate system is displayed at the screen on the operating pendant 17 connected to the control apparatus 13 along with the instruction. The abscissa shows time, the ordinate shows a Z-axis displacement, showing waveforms of a position instruction and a synthesized position response in correspondence therewith in the robot coordinate system of the robot.

An operator can determine whether the arm tip is vibrated by whether the synthesized position response falls in a previously set range by constituting a reference by the position instruction by looking at the waveforms. Further, there may be constructed a constitution in which the determination is automatically carried out at inside of the control apparatus 13 and when the response is out of the range, an alarm is issued. Further, the comparison of the waveforms of the position instruction and the synthesized position response maybe carried out by a unit of the articulate axis by proceeding to a failure diagnosis mode after the comparison in the robot coordinate system. The articulate axes are operated axis by axis from a hand tip or a root, and the synthesized position response is converted to an angle coordinate system to compare with the position instruction.

By carrying out the comparison in two stages from the comparison in the robot coordinate system to the comparison in the angle coordinate system in this way, data of comparison is reduced initially in the comparison in the robot coordinate system (3 axis of XYZ), and when the vibration is detected, the comparison is carried out in details by the comparison in the angle coordinate system (6 axes), thereby, an operational load of the control apparatus in normal monitoring can be reduced.

When the vibration exceeds previously set range, it is determined that the speed reducer is worn, and display of alarm or request for interchange can be outputted to the operator.

Although according to the embodiment, the failure diagnosis is carried out at inside of the control apparatus 13, the failure diagnosis can be carried out from a remote place by transmitting the position instruction and the synthesized position response in correspondence therewith to a maintenance section disposed at a remote place by way of a communicating portion of a commercial network, the internet or the like. This is particularly effective in remote failure diagnosis of a robot operated overseas.

Embodiment 4

A fourth specific embodiment of the invention will be explained in reference to Fig.6.

Whereas according to the first specific embodiment, the absolute position in the robot coordinate system of the robot 11 is calculated by converting the state amount (articulate angle) of the internal field sensor into the state amount (position) in the robot coordinate system, the embodiment differs therefrom in using a state amount of a simulator in place of the state amount of the internal field sensor.

According to the first specific embodiment, when the load side effects the influence on the internal field sensor from the speed reducer of the motor, a special processing is needed for removing the vibration component from the signal of the internal field sensor. According to the embodiment, a synthesized position response is formed by the following method in order to simplify the processing.

A processing of a first operating portion 41 for converting the acceleration signal of the acceleration sensor 14 into the position in the robot coordinate system of the robot 11 is the same as that of the first specific example, and therefore, an explanation thereof will be omitted.

(2) second step

In the robot 11 and the control apparatus 13, as shown by Fig.6, there is provided a simulation portion 30 processed in parallel with each axis servo motor 21 of the robot and a mechanism portion 22 connected to the servo motor. The simulation portion 30 is constituted by an actual machine portion 20 constituted by a motor control portion 23 for driving the servo motor 21 based on an instruction, a motor model 31 simulating the servo motor 21, a mechanism model portion 32 simulating the mechanismportion 22, and a control model portion 33 simulating the motor control portion 23.

The simulation portion 30 can reflect a movement characteristic of the motor including a delay in a servo system of the actual machine portion 20, a characteristic of a mechanism and the like, and is inputted with the same position instruction from a higher order, and therefore, inner state amounts (position instruction, position feedback, position deviation, speed instruction, speed feedback, speed deviation and the like) of the actual machine portion 20 and the simulation portion 30 substantially coincide with each other. The inner state amount of the simulation portion does not undergo an influence from outside at all, and therefore, a processing of removing a vibration component or the like is not needed.

Although here, Fig.6 shows the system for one axis, actually, the whole system is constituted by a number of axes of the robot 11. As a specific operation of the simulation portion 30, the following equations may be solved.

$$\mathtt{Tref=J*Kv*(Kp*(\theta ref-\theta fb)-Vfb)} \cdots (1)$$

where, Tref: torque instruction

J: rotor inertia of motor + inertia of mechanism portion (including speed reducer)
Kv: speed loop gain
Kp: position loop gain
$\theta$ref: position instruction from higher order instruction generating portion 50
$\theta$fb: position feedback
Vfb: speed feedback

$$\mathtt{Vfb=\Sigma(dt*Tref/J)} \cdots (2)$$

where,

dt: operational period time
$\Sigma$: integration

$$\mathtt{\theta fb=\Sigma(dt*Vfb)} \cdots (3)$$

In a second operating portion 42, an articulate model angle response constituting an output of the simulation portion 30 is converted into the position in the robot coordinate system of the robot 11 by using a conversion equation generally referred to as forward conversion or forward kinetics.

Further, when a further detailed 2 inertia model is used in the simulation portion 30, there may be constructed a constitution of calculating equations (4) through (7), using a model mechanism position response on the load side of the speed reducer in place of the articulate model angle response, and using the conversion equation referred to as forward conversion or forward kinetics to thereby convert the articulate model angle response into the position in robot coordinate system of the robot 11.

$$\mathtt{Vfb=\Sigma\{dt(Tref-K*(\theta fb-Xfb))/Jm\}} \cdots (4)$$

where,

K: reducer spring constant
Xfb: model mechanical position response
Jm: rotor inertia of motor

$$\theta fb=\Sigma(dt*Vfb) \cdots (5)$$

$$X'fb=\Sigma\{dt*K*(\theta fb-Xfb)/JL\} \cdots (6)$$

where, respective notations are as follows.

X' fb: model mechanical speed response
JL: inertia of mechanism portion (including speed reducer)

$$Xfb=\Sigma(dt*X'fb) \cdots (7)$$

(3) third step

In an output synthesizing portion 43, a first state amount (position) by the robot coordinate system by the sensor calculated in the first sensor operating portion, and a second state amount (position) in the robot coordinate system by the articulate model angle response of the simulation portion calculated by the second sensor operating portion 42 are synthesized. As described above, the inner state mount of the simulation portion does not undergo the influence from outside at all, and therefore, a processing of removing vibration component or the like is not needed, and therefore, the first state amount (position) and the second state amount (position) may simply be added.
A fourth step and thereafter are the same as those of the first specific embodiment, and therefore, an explanation thereof will be omitted.
According to the embodiment, by using the simulation portion simulating the actual machine, measurement can be carried out by a simple system constitution without deteriorating an accuracy by doubly detecting vibration.

Industrial Applicability

According to the invention, the movement state amount of the robot can be measured in noncontact and accurately by converting and synthesizing the state amounts from the sensors provided at the arms of the robot and the internal field sensors of the respective axes of the robot into the state amounts in the robot coordinate system, and therefore, the invention is applicable also to a use of abnormality detection by an aging change of the robot at a remote place, or identification or adjustment of a parameter by remote operation.

**Claims**

1.  An evaluating system of a robot comprising:

    a sensor provided at an arm of a robot for detecting a movement state amount of the arm;
    an angle detector for measuring an articulate angle of each axis servo motor of the robot;
    a first sensor operating portion for converting a state amount of the sensor into a state amount in a robot coordinate system;
    a second sensor operating portion for converting the articulate angle of the angle detector into the state amount in the robot coordinate system; and

an output synthesizing portion for synthesizing an output of the sensor operating portion and an output of the second sensor operating portion.

2. The evaluating system of a robot according to Claim 1, wherein
the sensor is an acceleration sensor.

3. The evaluating system of a robot according to Claim 1, wherein
the sensor is a gyro sensor.

4. The evaluating system of a robot according to Claim 1, wherein
a servo gain of the each servo motor of the robot is adjusted based on an output synthesized value constituting an output of the output synthesizing portion.

5. The evaluating system of a robot according to Claim 1, wherein
an orthogonal instruction value constituted by converting an articulate instruction of the each axis servo motor into a position and a speed and an acceleration in the robot coordinate system and an output synthesized value constituting an output of the output synthesizing portion are displayed on a screen of an operating pendant connected to the control apparatus.

6. An evaluating method of a robot comprising:

a first step of calculating a first sensor output value by converting a state amount of a sensor provided at an arm of a robot for detecting a movement state amount of the arm into a state amount in a robot coordinate system;
a second step of calculating a second sensor output value by converting an articulate angle measured by an angle detector connected to each axis servo motor of the robot into a state amount in the robot coordinate system; and
a third step of calculating an output synthesized value by synthesizing the first sensor output value and the second sensor output value.

7. The evaluating method of a robot according to Claim 6, further comprising:

a fourth step of adjusting a servo gain of the each axis servo motor of the robot based on the output synthesized value.

8. The evaluating method of a robot according to Claim 7, wherein
a speed loop gain of the each axis servo motor is adjusted by converting the state amount in the robot coordinate system into a state amount in an angle coordinate system.

9. The evaluating system of a robot according to Claim 1, wherein
an abnormality in an operation of the robot is detected based on an output synthesized value constituting an output of the output synthesizing portion.

10. The evaluating system of a robot according to Claim 5, wherein
the orthogonal instruction value and the output synthesized value are transmitted to a remote place by way of a communicating portion.

11. The evaluating method of a robot according to Claim 6, further comprising:

a fourth step of detecting an abnormality in an operation of the robot based on the output synthesized value.

12. An evaluating system of a robot in an evaluating system of a robot including each axis servo motor of a robot, a mechanism portion connected to the servo motor and a motor control portion for driving the servo motor based on an instruction,
the evaluating system of the robot comprising:

a simulation portion including a motor model simulating the servo motor, a mechanism model portion simulating the mechanism portion and a control model portion simulating the motor control portion;

a sensor provided at an arm of the robot, for detecting a movement state amount of the arm;

a first sensor operating portion for converting a state amount of the sensor into a state amount in a robot coordinate system;

a second sensor operating portion for converting an articulate model angle response or a model mechanical position response constituting an output of the simulation portion into a state amount in the robot coordinate system; and

an output synthesizing portion for synthesizing an output of the first sensor operating portion and an output of the second sensor operating portion.

**13.** An evaluating method of a robot comprising;

a first step of calculating a first sensor output value by converting a state amount of a sensor provided at an arm of a robot, for detecting a movement state amount of the arm into a state amount in a robot coordinate system;

a second step of calculating an articulate model angle response or a model mechanical position response as an output of a simulation portion by inputting an instruction the same as an instruction of an actual machine portion to the simulation portion by the simulation portion constituted by a motor model, a mechanism model portion and a control model portion respectively simulating the actual machine portion constituted by each axis servo motor of the robot, a mechanism portion connected to the servo motor and a motor control portion for driving the servo motor based on the instruction;

a third step of calculating a second sensor output value by converting the articulate model angle response or the model mechanical position response into a state amount in the robot coordinate system; and

a fourth step of calculating an output synthesized value by synthesizing the first sensor output value and the second sensor output value.

# FIG. 1

# FIG. 2

FIRST STEP → CONVERT STATE AMOUNT OF SENSOR FOR DETECTING MOVEMENT STATE AMOUNT OF ARM INTO STATE AMOUNT IN ROBOT COORDINATE SYSTEM

↓

TWICE INTEGRATING PROCESSING

↓

PROCESSING OF REMOVING OFFSET COMPONENT BY HIGH PASS FILTER OR MOVING AVERAGE

↓

SECOND STEP → CONVERT ARTICULATE ANGLE OF ANGLE DETECTOR INTO STATE AMOUNT IN ROBOT COORDINATE SYSTEM

↓

FORWARD CONVERTING PROCESSING

↓

THIRD STEP → SYNTHESIZE FIRST OUTPUT VALUE IN ROBOT COORDINATE SYSTEM OF SENSOR AND SECOND OUTPUT VALUE IN ROBOT COORDINATE SYSTEM OF INTERNAL FIELD SENSOR

↓

VIBRATION COMPONENT PRESENT IN INTERNAL FIELD SENSOR? —YES→ REMOVE VIBRATION COMPONENT FROM INTERNAL FIELD SENSOR BY HIGH PASS FILTER OR MOVING AVERAGE

NO ↓

↓

ADDING PROCESSING

↓

END

FIG. 3(a)

FIG. 3(b)

FIG. 3(c)

FIG. 3(d)

FIG. 3(e)

# FIG. 4(a)

# FIG. 4(b)

## FIG. 5

## FIG. 6

# FIG. 7

ARTICULATE

ARTICULATE

ARTICULATE

ROBOT

MEASURING
APPARATUS

BASE

## INTERNATIONAL SEARCH REPORT

| International application No. |
| --- |
| PCT/JP2005/015134 |

**A. CLASSIFICATION OF SUBJECT MATTER**
**B25J13/08** (2006.01)

According to International Patent Classification (IPC) or to both national classification and IPC

**B. FIELDS SEARCHED**

Minimum documentation searched (classification system followed by classification symbols)
**B25J1/00** (2006.01)-**B25J21/02** (2006.01), **G05B19/18** (2006.01)-**G05B19/42**
(2006.01)

Documentation searched other than minimum documentation to the extent that such documents are included in the fields searched
Jitsuyo Shinan Koho            1922-1996    Jitsuyo Shinan Toroku Koho    1996-2005
Kokai Jitsuyo Shinan Koho     1971-2005    Toroku Jitsuyo Shinan Koho    1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 6-332535 A (Kobe Steel, Ltd.),<br>02 December, 1994 (02.12.94),<br>Full text; all drawings<br>(Family: none) | 1-13 |
| A | JP 5-111889 A  (Fanuc Ltd.),<br>07 May, 1993 (07.05.93),<br>Full text; all drawings<br>(Family: none) | 1-13 |

☐ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>29 November, 2005 (29.11.05) | Date of mailing of the international search report<br>06 December, 2005 (06.12.05) |
| --- | --- |
| Name and mailing address of the ISA/<br>Japanese Patent Office | Authorized officer |
| Facsimile No. | Telephone No. |

Form PCT/ISA/210 (second sheet) (April 2005)

| **INTERNATIONAL SEARCH REPORT** | International application No. |
|---|---|
| | PCT/JP2005/015134 |

Claims 1, 6, 12, 13 contain a phrase "sensor for detecting the movement state amount of the arm", which is not supported within the meaning of PCT article 6 because only the sensor for detecting movement state amount of the hand tip is disclosed in accordance with the provisions of PCT Article 5.

Accordingly, the search has been performed on the range disclosed, i.e., the sensor in claims 1, 6, 12, 13 is a sensor for detecting the movement state amount of the hand tip.

Form PCT/ISA/210 (extra sheet) (April 2005)

**REFERENCES CITED IN THE DESCRIPTION**

**Patent documents cited in the description**

- JP 2004050356 A
- JP 6278080 A
- JP 8090465 A
- JP 11197834 A
- JP 3442941 B